# DEMANDE DE BREVET EUROPEEN

(11) **EP 0 581 375 A1**
(43) Date de publication de la demande: **02.02.1994**
(21) Numéro de dépôt: 93202171.0
(22) Date de dépôt: 22.07.1993
(51) Int. Cl.: H04N 7/167

(54) **Procédé pour modifier des séquences pseudo-aléatoires et dispositif servant à embrouiller ou à désembrouiller des informations**

(30) Priorité: 29.07.1992 FR 9209400
(71) Demandeur: PHILIPS ELECTRONIQUE GRAND PUBLIC, 92150 Suresnes (FR); PHILIPS ELECTRONICS N.V., 5621 BA Eindhoven (NL)
(72) Inventeur: Quisquater, Jean-Jacques, Société Civile S.P.I.D., F-75008 Paris (FR); Rakhodai, Issa, Société Civile S.P.I.D., F-75008 Paris (FR)
(74) Mandataire: Caron, Jean

(57) **Abrégé**

Pour modifier dynamiquement des séquences pseudo-aléatoires d'un générateur de séquences pseudo-aléatoires qui est ré-initialisé à chaque début de paquet d'informations, on prélève l'information elle même, on la retarde et on la combine avec une des suites de bits présentes dans le générateur de séquences pseudo-aléatoires. En outre après avoir retardé d'un retard déterminé (20) l'information prélevée, on la modifie en la faisant transiter par une porte "OU-EXCLUSIF" (23), en retardant, d'un retard (21) égal à celui (20) apporté à la dite information prélevée, le signal de sortie de cette porte et en le rebouclant sur l'entrée de la porte.

## Description

La présente invention concerne un procédé pour modifier dynamiquement une séquence pseudo-aléatoire produite par un générateur de séquences pseudo-aléatoires, séquence servant à embrouiller ou à désembrouiller des informations dont au moins une partie se présente sous la forme d'un signal numérique divisé en paquets, l'embrouillage ou le désembrouillage étant obtenu en combinant la dite séquence pseudo-aléatoire avec le dit signal numérique, le dit générateur de séquences pseudo-aléatoires étant ré-initialisé à chaque début de paquet au moyen d'un mot d'initialisation.

L'invention concerne aussi un dispositif destiné à embrouiller ou à désembrouiller des informations dont au moins une partie est transmise sous forme d'un signal numérique divisé en paquets, comportant un générateur de séquences pseudo-aléatoires qui est ré-initialisé à chaque début de paquet, une première fonction combinatoire non récursive destinée à former une séquence pseudo-aléatoire sur la base d'une suite de bits présente dans le générateur de séquences pseudo-aléatoires, une seconde fonction combinatoire pour combiner la séquence pseudo-aléatoire avec le signal numérique à embrouiller ou à désembrouiller.

Un tel procédé et un tel dispositif sont utilisés notamment en télévision pour des émissions dont la réception est réservée, par exemple à des personnes qui ont payé un abonnement ou qui répondent à des critères particuliers (émissions réservées à certaines professions).

De nombreux procédés et dispositifs correspondant à ceux décrits ci-dessus sont connus. L'un d'eux est par exemple celui qui est normalisé et défini dans le document "SPECIFICATION 0F THE D2-MAC/PACKET SYSTEM", édition 1985, pages 141 à 166. Le dispositif comprend un générateur de séquences pseudo-aléatoires qui utilise un mot d'initialisation construit au niveau d'un récepteur en combinant un mot de contrôle qui est déterminé à partir d'un nombre envoyé par un émetteur, d'un numéro de trame d'image en cours, et d'une grandeur représentative de la position du paquet de données dans la trame. Le générateur de séquences pseudo-aléatoires est muni de deux registres à décalage. Chacun d'eux est rebouclé sur lui même et une suite de bits y est prélevée pour être un des éléments servant à former une des dites séquences pseudo-aléatoires. Au début de chaque paquet, les registres à décalage sont ré-initialisés, c'est-à-dire chargés à partir du mot d'initialisation. Le nombre envoyé par l'émetteur est changé toutes les dix secondes. Du fait que le numéro de trame d'image en cours et la position du paquet de données dans la trame interviennent dans la construction du mot d'initialisation, ce dernier change environ deux mille fois par seconde.

On s'intéresse maintenant à des systèmes de télévision numérique dans lesquels ni les trames ni les paquets ne sont numérotés. Lorsque l'on applique un procédé d'embrouillage connu, par exemple celui selon la norme D2-MAC, dans ces systèmes, la recherche frauduleuse du mot d'initialisation devient plus facile, puisqu'il ne change que toutes les dix secondes, et non plus vingt mille fois par seconde, et qu'en dix secondes le faussaire dispose, pour effectuer des recherches et découvrir les séquences pseudo-aléatoires utilisées pour l'embrouillage, de beaucoup d'échantillons qui sont tous engendrés avec la même séquence pseudo-aléatoire.

Or un critère essentiel dans un tel système est l'impossibilité de retrouver frauduleusement le mot d'initialisation. Cette impossibilité est d'ailleurs relative : on entend par là que cela ne peut pas être fait en un temps suffisamment court pour que le procédé en question soit valable en pratique. Dans ce but, il est possible de diversifier la séquence pseudo-aléatoire en faisant intervenir le message lui même dans la création de la séquence.

Toutefois une telle façon de faire entraîne un risque de propagation des erreurs, c'est-à-dire qu'en cas d'erreur de transmission dans le canal de transmission, une erreur est multipliée par la mise en oeuvre du désembrouillage, du côté du récepteur.

L'invention se propose de résoudre ce problème.

Selon l'invention on prélève le dit signal numérique, on le retarde, et on le combine avec une suite de bits présente dans le générateur de séquences pseudo-aléatoires de façon à modifier cette suite de bits, et on modifie le signal numérique prélevé, avant de le combiner avec une suite de bits présente dans le générateur de séquences pseudo-aléatoires, en le soumettant à une opération logique de type "OU-EXCLUSIF", l'un des opérandes étant le signal lui même et l'autre opérande étant le signal issu de la dite opération, retardé d'un temps égal au décalage entre l'instant où le signal numérique est prélevé et l'instant où le fait de le combiner avec une suite de bits présente dans le générateur de séquences pseudo-aléatoires a une action en retour sur le signal numérique.

Ainsi on complique beaucoup la tâche pour retrouver le mot d'initialisation, tout en limitant la propagation des erreurs.

Selon un mode de mise en oeuvre particulier du procédé, pour chaque nouveau paquet, on commence à combiner le signal retardé avec la suite de bits présente dans le générateur de séquences pseudo-aléatoires seulement après un certain délai depuis le début du paquet.

Ainsi on augmente encore la difficulté à retrouver frauduleusement le mot d'initialisation.

Pour modifier la séquence pseudo-aléatoire, un dispositif selon l'invention comporte un circuit de retardement dont l'entrée est reliée à une connexion portant le signal numérique, et dont la sortie est reliée à la dite première fonction combinatoire du générateur pseudo-aléatoire de façon à y modifier la dite suite de bits, et une porte "OU-EXCLUSIF" qui est insérée dans le circuit de retardement entre la dite connexion portant le signal numérique et la dite première fonction combinatoire, et dont la sortie est rebouclée sur son entrée via un moyen de retardement qui apporte un retard égal au décalage entre l'instant où le signal numérique est prélevé et l'instant où le fait de le combiner avec une suite de bits présente dans le générateur de séquences pseudo-aléatoires a une action en retour sur le signal numérique.

Ainsi on complique beaucoup la tâche pour retrouver le mot d'initialisation, tout en limitant la propagation des erreurs.

Selon un mode de réalisation avantageux, la porte "OU-EXCLUSIF" étant munie d'au moins une première et une seconde entrées, la première entrée est connectée à la connexion portant le signal numérique, la sortie de cette porte "OU-EXCLUSIF" est reliée à sa seconde entrée via un circuit de retardement, et une prise intermédiaire dans ce circuit de retardement est reliée à la première fonction combinatoire du générateur pseudo-aléatoire, le retardement entre la dite prise et la seconde entrée de la porte étant égal au temps de transit dans le générateur de séquences pseudo-aléatoires, c'est-à-dire le temps nécessaire pour que le signal amené à partir de la dite prise à la première fonction combinatoire du générateur pseudo- aléatoire fasse effet en retour sur le signal numérique.

Ces aspects de l'invention ainsi que d'autres aspects plus détaillés apparaîtront plus clairement grâce à la description suivante d'un mode de réalisation non limitatif.

La figure 1 représente schématiquement un dispositif d' embrouillage ou de désembrouillage auquel l'invention peut s'appliquer.

La figure 2 représente un mode de réalisation du circuit de retardement avec la porte "OU-EXCLUSIF", qui est l'élément 14 du dispositif de la figure 1.

La figure 3 représente schématiquement un autre dispositif d'embrouillage ou de désembrouillage auquel l'invention peut s'appliquer.

La figure 4 représente un mode de réalisation du circuit de retardement avec la porte "OU-EXCLUSIF" pour une application au dispositif de la figure 3.

La figure 5 représente un autre mode de réalisation du circuit de retardement avec la porte "OU-EXCLUSIF", dans le cas de l'élément 14 du dispositif de la figure 1.

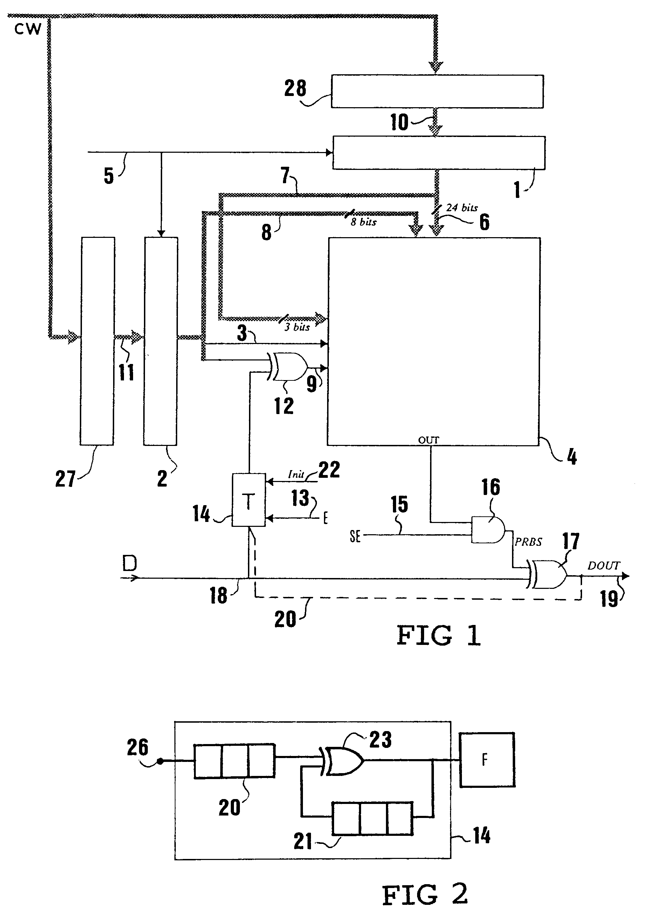

Le dispositif dont le schéma est représenté sur la figure 1 est destiné à embrouiller des signaux de télévision à l'émission et, moyennant une petite modification, il peut aussi servir à la réception pour le désembrouillage. Dans le cas d'un standard de télévision numérique, que cela soit en définition normale ou en haute définition, les informations sont transmises sous forme d'un signal numérique divisé en paquets.

Le dispositif comporte un générateur de séquences pseudo-aléatoires qui comprend un premier registre à décalage 1 (à 31 bits) et un second registre à décalage 2 (à 29 bits). Chacun d'eux est rebouclé sur lui même de façon connue pour représenter fonctionnellement un polynome premier, et son contenu avance d'une position à chaque top d'un signal d'horloge qui est amené par une connexion 5. Les registres sont ré-initialisés au début de chaque paquet de données, c'est-à-dire chargés au moyen d'un mot d'initialisation amené par une connexion "cw" et mémorisé dans des mémoires tampon 27 et 28. Ce mot comporte 60 bits : 31 d'entre eux servent à charger le registre 1 par la connexiuon 10 et les 29 autres servent à charger le registre 2 par la connexion 11. Du premier registre sont tirés 24 bits par la connexion 6, et du second registre sont tirés huit bits par la connexion 8, ce qui donne 32 bits. Ces bits sont fournis à un multiplexeur 4 qui constitue une première fonction combinatoire non récursive destinée à former une séquence pseudo-aléatoire sur la base d'une suite de bits présente dans le générateur de séquences pseudo-aléatoires, et qui reçoit aussi par la connexion 7 trois autres bits depuis le registre 1 et par les connexions 3 et 9 deux autres bits depuis le registre 2. Ces cinq bits représentent un nombre pouvant aller de 0 à 31, lequel nombre désigne un bit parmi les 32 bits présents sur les connexions 6 et 8. Le bit issu du multiplexeur 4 est amené à une entrée d'une porte 16, à une autre entrée de laquelle est amené un signal 15 (SE = "scrambling enable") qui ouvre ou ferme la porte 16 selon qu'il y a lieu d'embrouiller ou non. Le bit issu de la porte 16, si elle est ouverte, arrive enfin à une première entrée d'une porte 17, par exemple de type OU-EXCLUSIF, qui constitue une deuxième fonction combinatoire, et le signal numérique D à embrouiller est amené via le point 18 à une seconde entrée de la porte 17, de façon à fournir sur la sortie 19 de la porte un signal numérique embrouillé.

Ainsi des suites de bits sont prélevées dans des registres à décalage 1 et 2 pour servir à former une séquence pseudo-aléatoire constituée par les bits successifs sortant en 25 du multiplexeur 4, laquelle est combinée avec le signal numérique à embrouiller. Ce circuit, tel qu'il a été décrit jusqu'à présent, peut aussi bien servir, sans changement, pour embrouiller un signal D clair, ou pour désembrouiller un signal D embrouillé.

Pour augmenter la difficulté, pour une personne non autorisée, à trouver le mot d'initialisation, on prélève dans le cas de l'embrouillage le signal numérique D au niveau du noeud 18, c'est-à-dire en un point où le signal numérique n'est pas encore embrouillé, et on retarde ce signal numérique au moyen d'un élément de retardement 14 qui en pratique est un registre à décalage non rebouclé et qui apporte un retard T, élément dont l'entrée est connectée à la connexion 18 portant le signal numérique, et dont la sortie est reliée au multiplexeur 4 via un circuit 12 qui combine le signal retardé avec une suite de bits issue du registre à décalage 2. Une entrée 13 (E="enable") permet de mettre en service ou d'inhiber l'élément 14, et une entrée 22 est prévue pour commander le chargement de zéros dans le registre 14 en début de paquet.

Au lieu d'utiliser une porte telle que la porte 12 décrite ci-dessus, la combinaison avec la suite de bits du registre peut aussi se faire de bien d'autres manières : on peut aussi altérer chaque bit de la connexion arrivant au point 9 (ou de l'une des connexions 3 ou 7) en le multipliant par un bit du signal retardé au lieu d'y ajouter ce bit, on peut aussi le remplacer par un bit du signal retardé, on peut aussi se baser sur chaque bit du signal sortant de l'élément 14 pour intervertir ou non les signaux entre deux fils des connexions 7, 3, ou 9. On peut en outre se baser sur le signal retardé lui même ou sur certains bits du mot de contrôle ou du mot d'initialisation pour choisir au coup par coup entre plusieurs de ces manières. Il est clair que le nombre de variantes est très grand. Dans tous les cas, le bit en sortie de l'élément 14 agit en fin de compte sur le multiplexeur 4.

Le signal D est ainsi modifié dynamiquement dans la mesure où sa modification par la porte 17 dépend du contenu du signal lui même.

Dans le cas d'un désembrouillage, le schéma de la figure 1 reste valable à une modification près : l'entrée de l'élément de retardement 14 doit alors être reliée en un point où le signal numérique est désembrouillé, c'est-à-dire à la sortie de la porte 17, comme cela est indiqué par le trait en tirets 33.

Le retard est de T périodes d'horloge, par exemple T est compris entre une et dix périodes. Le fonctionnement est le suivant : avec un retard par exemple de trois périodes d'horloge, un bit de rang N du message agit pour modifier en retour le bit de rang N+3. Le bit de rang N+1 du message agit pour modifier en retour le bit de rang N+4, et ainsi de suite. Lorsqu'on arrive au bit de rang N+6, il est modifié par le bit de rang N+3, qui avait été lui même modifié par le bit de rang N : ainsi, plus l'on avance dans le paquet, plus la modification devient complexe et difficile à retrouver.

Il est clair que le procédé ainsi mis en oeuvre complique la tâche lorsqu'il s'agit de retrouver le mot d'initialisation par des essais et comparaisons successifs car, le mot d'initialisation n'étant changé par exemple que toutes les dix secondes, on disposerait sans les éléments 12 et 14 du même mécanisme d'embrouillage pendant un temps assez long ce qui permettrait de réaliser de nombreux essais pout retrouver le mot d'initialisation, alors qu'avec les éléments 12 et 14 le mécanisme est modifié à chaque paquet, ce qui limite le temps disponible pour rechercher le mot d'initialisation. Néanmoins ce système présente un inconvénient : si une erreur de transmission affecte le signal, cette erreur est introduite dans la séquence de désembrouillage alors qu'elle n'était pas présente dans la séquence correspondante d'embrouillage, et elle va donc induire, par suite du retard T appliqué au signal dans l'élément 14, une deuxième erreur décalée de T périodes d'horloge, qui elle même va se trouver ré-introduite dans la séquence, et ainsi de suite : un très grand nombre d'erreurs va ainsi être introduit.

Pour remédier à celà on a imaginé de modifier le signal retardé comme indiqué sur la figure 2. Le signal prélevé est retardé d'un retard T, au moyen d'un circuit de retardement qui est un registre à décalage 20 à T positions, dont l'entrée 26 est reliée soit au point 18 (dans le cas de l'embrouillage), soit au point 19 (dans le cas du désembrouillage) du schéma de la figure 1. Ce circuit 20 est commandé par l'horloge du système et il possède ici trois positions, ce qui procure un retard de trois périodes d'horloge déja mentionné à titre d'exemple. Le signal sortant de ce circuit de retardement est amené à une entrée d'une porte "OU-EXCLUSIF" 23 dont le signal de sortie est amené au circuit F, c'est-à-dire le circuit 12 de la figure 1. La sortie de la porte 23 est aussi rebouclée sur une seconde entrée de cette même porte via un second circuit de retardement 21, qui est aussi un registre et qui apporte un retard égal à celui apporté par le premier circuit de retardement 20.

Le fonctionnement est le suivant : lorsque le bit de rang N+3 apparaît à la sortie de l'élément 20, le bit de rang N, retardé successivement par les éléments 20 et 21, apparaît au même moment sur l'autre entrée de la porte 23 et modifie éventuellement l'état de la sortie de la porte, qui via les différents éléments 12, 2, 4, 16, agit en fin de compte dans la porte 17 sur le désembrouillage du bit de rang N+6 du signal. Supposons que par suite d'une erreur de transmission, le bit de rang N soit erroné. Le bit de rang N+3 sera désembrouillé de façon erronée du fait que le bit de rang N est lui même erroné, et il sera donc prélevé avec sa valeur erronée pour être retardé, mais lorsqu'il apparaîtra en sortie de l'élément 20, le bit N apparaîtra précisément lui aussi à ce moment à l'entrée de la porte 23. L'addition en "OU-EXCLUSIF" de ces bits, erronés tous les deux, reproduit en sortie un bit correct, et l'erreur cesse de se propager. Ceci suppose bien entendu qu'aucun retard n'est apporté dans les autres éléments du montage, notamment les éléments 12, 14, et le multiplexeur 4. Pour chaque erreur de transmission le système en introduit donc une deuxième, mais pas plus. Imaginons en outre que les bits N et N+3 soient tous deux affectés d'une erreur de transmission. Alors le bit N+3 erroné va devenir correct lors du désembrouillage et la situation est encore meilleure : la première erreur a annulé la seconde.

Au début d'un paquet, il arrive que le contenu de l'information soit relativement prévisible. Il est alors plus facile de trouver le mot d'initialisation puisque l'on a une idée du signal désembrouillé qu'il faut trouver. Il est donc préférable de ne pas embrouiller le début des paquets afin de ne pas permettre l'utilisation de ces débuts de paquet pour retrouver le mot d'initialisation. Au moyen de la commande 13 de la figure 1, il est possible de mettre en oeuvre ou non le complément d'embrouillage ou de désembrouillage tel que décrit ci-dessus. On utilisera donc cette commande de façon telle que, pour chaque nouveau paquet, ce soit seulement après un certain délai depuis le début du paquet que le signal retardé et la suite de bits présente dans le générateur de séquences pseudo-aléatoires commencent à être combinés l'un à l'autre. En outre, pour compliquer le processus, le dit délai peut être lui même déterminé à partir des premiers bits du paquet ou à partir de bits du mot d'initialisation.

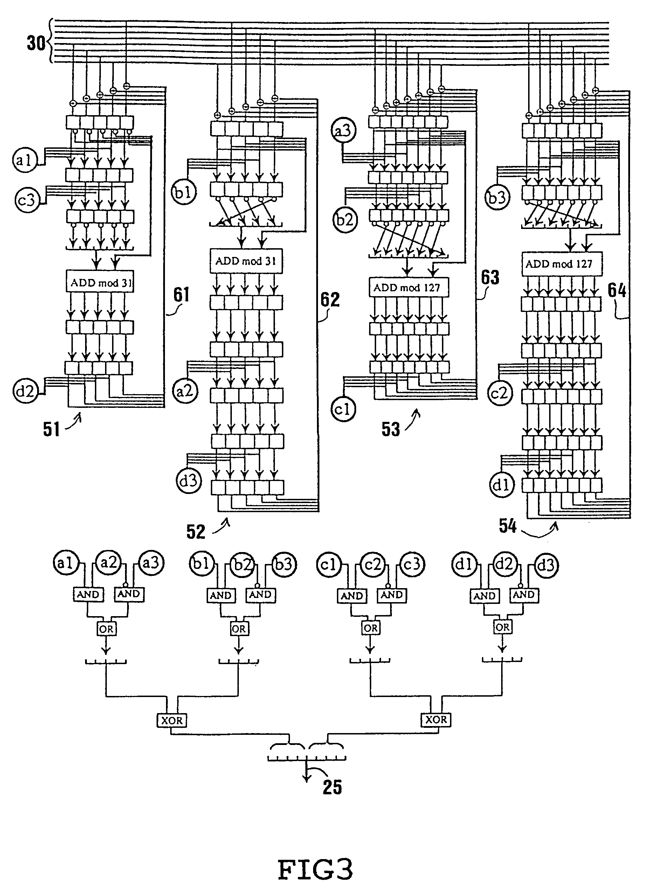

Le dispositif dont le schéma est représenté sur la figure 3 a été lui aussi proposé pour embrouiller des signaux de télévision.

Ce dispositif est un générateur de séquences pseudo-aléatoires qui comprend quatre registres à décalage 51, 52, 53, 54. Chacun d'eux est rebouclé sur lui même par une connexion respectivement 61, 62, 63, 64. Une différence importante avec le générateur de la figure 1 est qu'ici les registres sont prévus pour des mots et non plus pour des bits, autrement dit ils travaillent sur plusieurs bits en parallèle et les connexions 61 à 64 sont de type multifils. Les registres sont réinitialisés au début de chaque paquet de données : le premier étage de chaque registre est chargé au moyen des bits d'un mot d'initialisation amené par un bus 30, et les autres étages sont remis à zéro. Lors de leur progression dans les registres, les mots sont altérés par diverses dispositions dont par exemple l'insertion d'additionneurs logiques "ADD mod 31", "ADD mod 127", l'interversion de bits d'un mot, l'insertion de bits provenant de plusieurs étages en amont, notamment en sortie du troisième étage du registre 51, en sortie du deuxième étage du registre 52, du troisième étage du registre 53, ou du deuxième étage du registre 54. Des mots prélevés en a1, a2 .....d2, d3 sont amenés aux entrées d'autres additionneurs AND eux mêmes suivis d'additionneurs OR et XOR, fournissant en fin de compte une séquence de mots pseudo-aléatoires 25. La même référence 25 que dans la figure 1 a été choisie pour montrer que la connexion portant ces séquences a une fonction similaire dans les deux montages. D'autres particularités du montage apparaîtront aisément à l'homme du métier, et ne sont représentées qu'à titre d'exemple. Bien entendu la séquence 25 est appliquée au signal à embrouiller ou à désembrouiller au moyen de circuits dont l'interconnexion est identique à celle des circuits 16, 17, 14 du montage de la figure 1, et qui ne sont pas représentés à nouveau pour cette raison. Toutefois chacun des circuits en question traite maintenant un mot entier et non un simple bit, une porte 16 ou 17 devient donc un ensemble de N portes, N étant le nombre de bits en parallèle. De même, le signal à retarder est maintenant prelevé par mots successifs et non plus bit à bit. Un tel montage offre l'avantage, par rapport à celui de la figure 1, d'être beaucoup plus rapide grâce au traitement en parallèle.

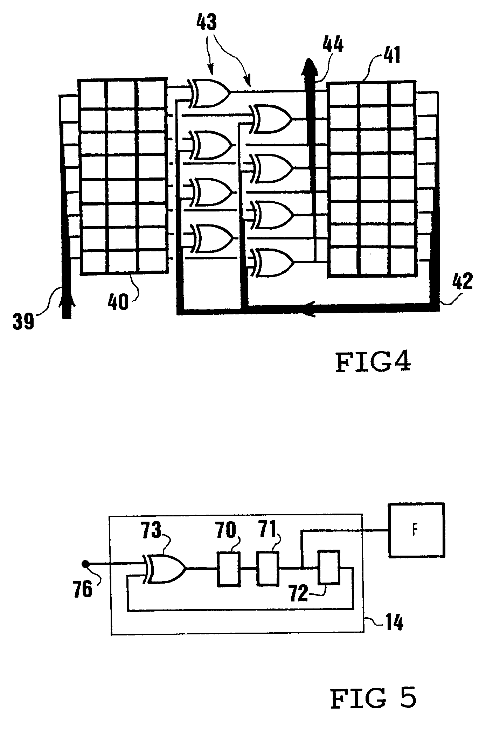

Le signal numérique est prélevé, retardé, et modifié comme indiqué sur la figure 4. Après avoir prélevé un mot de huit bits dans le signal par une connexion 39, on retarde ce mot au moyen d'un circuit de retardement qui est un registre à décalage 40 (avec ici trois positions, ce qui procure un retard de trois périodes d'horloge) à huit bits en parallèle, commandé par l'horloge du système, on modifie ce mot en amenant chacun de ses bits à une entrée d'une des portes d'un ensemble de portes "OU-EXCLUSIF" 43 dont les sorties sont reliées à un second circuit de retardement 41, qui est un registre identique au registre 40, dont chacun des bits de sortie est amené par une connexion multifils 42 à une seconde entrée d'une des portes de l'ensemble de portes 43. Comme dans le circuit de la figure 2, c'est le signal sortant des portes 43, prélevé par une connexion 44 (ici à huit conducteurs), qui est utilisé pour modifier la séquence pseudo-aléatoire dans la partie non récursive du dispositif de la figure 3, par exemple en l'un des points indiqués "a1", "a2", etc, au moyen par exemple de huit portes "OU-exclusif".

Bien entendu, l'insertion d'un mot du signal retardé et modifié peut ici aussi se faire de différentes manières : on peut altérer un mot dans une connexion, soit en le multipliant par un mot du signal retardé, soit en y ajoutant un mot du signal retardé, soit en le remplaçant par un mot du signal retardé, soit en utilisant ce dernier poour commander des interversions de connexions, etc. Il est clair que le nombre de variantes possible est là encore très grand.

Le fonctionnement est semblable à celui du montage de la figure 2, et le raisonnement montrant comment les erreurs cessent de se propager est toujours valable.

Il est clair que les descriptions ci-dessus sont données à titre d'exemple mais que l'invention s'applique aussi quand le générateur pseudo-aléatoire est d'un type différent de ceux des deux exemples qui ont été donnés ci-dessus. L'invention peut par exemple aussi s'appliquer au générateur pseudo-aléatoire décrit dans le brevet FR-2 641 921 de la demanderesse, en appliquant le signal issu du circuit de retardement dans l'un des éléments référencés 30 ou 32 sur la figure unique de ce document, auquel on peut se reporter pour plus de détails. En général, n'importe quel générateur non récursif peut être associé au montage de l'invention qui le transforme en un générateur semi-récursif.

Le montage représenté sur la figure 2 est destiné à faire comprendre de façon simple le fonctionnement du dispositif, mais en pratique le schéma retenu est un peu différent, d'une part parcequ'il est possible de simplifier celui de la figure 2 en utilisant un seul élément de retardement, d'autre part parce qu'il peut être nécessaire de tenir compte d'un retard éventuel dans les éléments 12, 14 et surtout dans le multiplexeur 4, retard dont l'effet est que le bit de la séquence pseudo-aléatoire qui est en fin de compte modifié par le bit de rang N issu de l'élément 14 (c'est-à-dire de la porte 23 sur la figure 2) après un retard de trois temps d'horloge n'est plus le bit N+3 mais par exemple le bit N+4 ou le bit N+5, selon que le retard total apporté par les éléments 12, 14, 4 est respectivement de une ou deux périodes d'horloge. On peut même imaginer que si ces éléments apportent un retard suffisant, l'élément 20 de la figure 2 devienne inutile. La figure 5 représente un montage utilisable en pratique lorsque le retard total apporté par les éléments 12, 14, 4 est de une période d'horloge, et que le retard désiré pour le signal numérique prélevé est de trois périodes d'horloge. L'élément de retardement est maintenant unique et il est monté en aval de la porte "OU-EXCLUSIF" qui est maintenant référencée 73. Une première entrée 76 de cette porte est connectée à la connexion (18 ou 19 suivant le cas, figure 1) portant le signal numérique, la sortie de cette porte "OU-EXCLUSIF" 73 est reliée à sa seconde entrée via un circuit de retardement qui est constitué de trois circuits dits "latch" 70, 71, 72. Une prise intermédiaire dans ce circuit de retardement, entre les circuits 71 et 72, est reliée au circuit F, c'est-à-dire le circuit 12 de la figure 1. Le retardement entre la dite prise intermédiaire et la seconde entrée de la porte, c'est-à-dire ici une période d'horloge dans le circuit 72, est égal au temps de transit dans le générateur de séquences pseudo-aléatoires, c'est-à-dire le temps nécessaire pour que le signal amené à partir de la dite prise à l'élément 12 et donc au multiplexeur 4 fasse effet en retour sur le signal numérique, au niveau de la porte 17.

Bien entendu, le montage de la figure 4 peut facilement lui aussi être extrapolé sur la base de celui de la figure 5, dans le cas où le dispositif de la figure 3 est utilisé.

## Revendications

1. Procédé pour modifier dynamiquement une séquence pseudo-aléatoire produite par un générateur de séquences pseudo-aléatoires, séquence servant à embrouiller ou à désembrouiller des informations dont au moins une partie se présente sous la forme d'un signal numérique divisé en paquets, l'embrouillage ou le désembrouillage étant obtenu en combinant la dite séquence pseudo-aléatoire avec le dit signal numérique, le dit générateur de séquences pseudo-aléatoires étant ré-initialisé à chaque début de paquet au moyen d'un mot d'initialisation, caractérisé en ce qu'on prélève le dit signal numérique, on le retarde, et on le combine avec une suite de bits présente dans le générateur de séquences pseudo-aléatoires de façon à modifier cette suite de bits, et en ce qu'on modifie le signal numérique prélevé, avant de le combiner avec une suite de bits présente dans le générateur de séquences pseudo-aléatoires, en le soumettant à une opération logique de type "OU-EXCLUSIF", l'un des opérandes étant le signal lui même et l'autre opérande étant le signal issu de la dite opération, retardé d'un temps égal au décalage entre l'instant où le signal numérique est prélevé et l'instant où le fait de le combiner avec une suite de bits présente dans le générateur de séquences pseudo-aléatoires a une action en retour sur le signal numérique.

2. Procédé selon la revendications 1, caractérisé en ce que lorsque l'opération à réaliser est un embrouillage, le signal est prélevé en un point où il n'est pas encore combiné avec la séquence pseudo-aléatoire, et lorsque l'opération à réaliser est un désembrouillage, le signal est prélevé en un point où il est combiné avec la séquence pseudo-aléatoire.

3. Procédé selon l'une des revendications 1 ou 2, caractérisé en ce que, pour chaque nouveau paquet, on commence à combiner le signal retardé avec la suite de bits présente dans le générateur de séquences pseudo-aléatoires seulement après un certain délai depuis le début du paquet.

4. Procédé selon la revendication précédente, caractérisé en ce que le dit délai est lui même déterminé à partir des premiers bits du paquet.

5. Procédé selon la revendication 3, caractérisé en ce que le dit délai est lui même déterminé à partir de bits du mot d'initialisation.

6. Dispositif destiné à embrouiller ou à désembrouiller des informations dont au moins une partie est transmise sous forme d'un signal numérique divisé en paquets, comportant un générateur de séquences pseudo-aléatoires qui est ré-initialisé à chaque début de paquet, une première fonction combinatoire non récursive destinée à former une séquence pseudo-aléatoire sur la base d'une suite de bits présente dans le générateur de séquences pseudo-aléatoires, une seconde fonction combinatoire pour combiner la séquence pseudo-aléatoire avec le signal numérique à embrouiller ou à désembrouiller, caractérisé en ce que, pour modifier la séquence pseudo-aléatoire, le dispositif comporte en outre un circuit de retardement dont l'entrée est reliée à une connexion portant le signal numérique, et dont la sortie agit sur la dite première fonction combinatoire du générateur pseudo-aléatoire de façon à y modifier la dite suite de bits, et une porte "OU-EXCLUSIF" qui est insérée dans le circuit de retardement entre la dite connexion portant le signal numérique et la dite première fonction combinatoire, et dont la sortie est rebouclée sur son entrée via un moyen de retardement qui apporte un retard égal au décalage entre l'instant où le signal numérique est prélevé et l'instant où le fait de le combiner avec une suite de bits présente dans le générateur de séquences pseudo-aléatoires a une action en retour sur le signal numérique.

7. Dispositif selon la revendication 6, caractérisé en ce que, la porte "OU-EXCLUSIF" étant munie d'au moins une première et une seconde entrées, la première entrée est connectée à la connexion portant le signal numérique, la sortie de cette porte "OU-EXCLUSIF" est reliée à sa seconde entrée via un circuit de retardement, et une prise intermédiaire dans ce circuit de retardement est reliée à la première fonction combinatoire du générateur pseudo-aléatoire, le retardement entre la dite prise et la seconde entrée de la porte étant égal au temps de transit dans le générateur de séquences pseudo-aléatoires, c'est-à-dire le temps nécessaire pour que le signal amené à partir de la dite prise à la première fonction combinatoire du générateur pseudo-aléatoire fasse effet en retour sur le signal numérique.

8. Dispositif selon la revendication 6, destiné à l'embrouillage, dans lequel un bit de la dite séquence pseudo-aléatoire est amené à une première entrée de la seconde fonction combinatoire et un bit du signal numérique à embrouiller est amené à une seconde entrée de cette fonction, de façon à fournir en sortie de cette fonction un signal numérique embrouillé, caractérisé en ce que le dit circuit de retardement est relié à la dite seconde entrée de cette fonction.

9. Dispositif selon la revendication 6, destiné au désembrouillage, dans lequel un bit de la dite séquence pseudo-aléatoire est amené à une première entrée de la seconde fonction combinatoire et un bit du signal numérique à désembrouiller est amené à une seconde entrée de cette fonction, de façon à fournir en sortie de cette fonction un signal numérique désembrouillé, caractérisé en ce que le dit circuit de retardement est relié à la sortie de cette fonction.
